Europäisches Patentamt

European Patent Office

Office européen des brevets

(19)

(11) **EP 1 586 931 A2**

(12) **EUROPEAN PATENT APPLICATION**

(43) Date of publication:
**19.10.2005 Bulletin 2005/42**

(51) Int Cl.⁷: $G02B\ 21/00$

(21) Application number: **05251461.9**

(22) Date of filing: **10.03.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **05.04.2004 US 818585**

(71) Applicant: **Fujifilm Electronic Imaging Limited Hemel Hempstead, Herts, HP2 7RH (GB)**

(72) Inventor: **Gouch, Martin Philip Hemel Hempstead Herts HP2 4ND (GB)**

(74) Representative: **Skone James, Robert Edmund GILL JENNINGS & EVERY, Broadgate House, 7 Eldon Street London EC2M 7LH (GB)**

(54) **Slit confocal microscope and method**

(57)     A slit confocal microscope comprises a linear light source (10); a detection system (13); and a focusing system (3) for focusing light from the source onto a sample and focusing returning light onto the detection system (13). The detection system (13) comprises a one-dimensional, linear array of detectors onto which light from the sample is focused directly or indirectly by the focusing system. A control system (14) causes the linear array of detectors to integrate light from a corresponding line of pixels in the sample.

# Fig.1.

## Description

The invention relates to a slit confocal microscope and method of operating such a microscope.

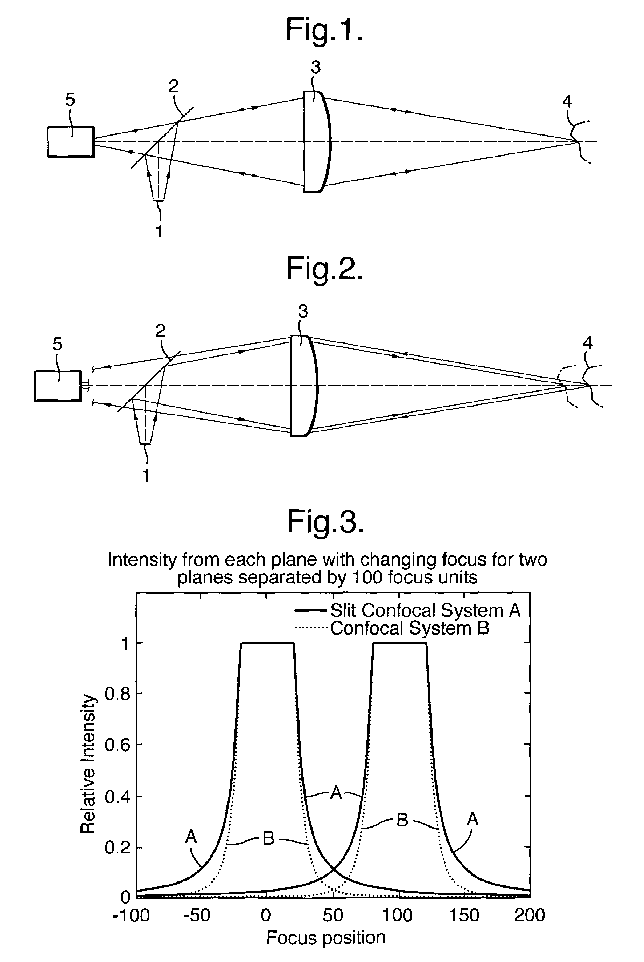

Confocal microscopes were first described in US-A-3013467 and are now well known in the art. A typical confocal microscope comprises a light source; a detection system; and a focussing system for focussing light from the source onto a sample and focussing returning light onto the detection system. In a typical example, an object is illuminated from a small area the size of a single pixel which is confocal with the detector pixel. Figures 1A and 1B illustrate such a conventional arrangement.

Thus, a point source 1 generates a light beam which impinges upon a beam splitter 2 from which it is reflected onto a focussing lens 3. The lens 3 focuses the light onto an object 4 and then light reflected or emitted by the object passes back to the lens 3 where it is focussed through the beam splitter 2 onto a detector 5 such as a photomultiplier tube located behind a pinhole (not shown) acting as a field stop. The illumination source 1 is the same size as the pinhole.

The system is circularly symmetric so that Figure 1 illustrates the appearance of the system from the side and in plan.

The confocality causes the image of the object to drop in intensity as the object moves away from the focus. In a conventional multiphoton system the effect of defocusing is simply to blur the image. In a confocal system, not only does it blur the image but also it darkens the image. This means that out of focus objects do not affect in focus objects.

An out-of-focus situation is shown in Figure 2. To produce a full two-dimensional image, the detector 5 and illumination area is normally moved across the object 4 in a raster scanning mechanism, usually with moving mirrors. If three-dimensional images are required then these can be produced by producing the two-dimensional images at different focal planes. This three-dimensional image can then be visualised using a three-dimensional imaging device or using a three-dimensional visualisation package. Alternatively, a two-dimensional image can be produced by merging the two-dimensional images of the different focus planes and thus produce an image with greater depth of focus than that which can be produced with a multiphoton microscope with the same optical resolution.

Because confocal microscopes are rotationally symmetric around the optical axis, the light level drop is proportional to the fourth power of the defocus. This is because the light level illuminating the object drops proportional to the square of the defocus and the light level detected from the object drops proportional to the square of the defocus. A typical rule of thumb is an image normally continues to look in focus until the PSF (point spread function) grows to a factor of four over the in focus condition. This means that in a confocal microscope, the light level has dropped by a factor of $4^4 = 256$ times by the time the depth of focus rule of thumb condition has been reached. This enables confocal microscope images to be added together when separated by a defocus distance similar to four PSF's and for each plane to be unaffected by any other plane.

A hybrid system of multiphoton imaging and confocal imaging can be generated if the light source is a line of light confocal with a slit. In this case, we get a blend of confocal and multiphoton imaging. It is often used for a visual confocal microscope and a description can be found in the literature such as "Handbook of Biological Confocal Microscopy", 2nd Edition, James B Pawley, Plenum Press. Such a microscope is termed a "slit confocal microscope".

The generation of a two-dimensional image is then performed by optically scanning the slit over the sample. For a digital image, the literature mentions the use of film cameras, or 2D detectors, "Handbook of Biological Confocal Microscopy", 2nd Edition, James B Pawley, Plenum Press, chapter 12, p195, such as CCD and cooled CCD for low light level conditions.

The loss of confocality in one dimension does have an effect but it is relatively minor. As a first approximation the equation for light intensity with focus is:

$$I = \left(\frac{\pi \cdot w_0^2}{\pi \cdot w_z^2}\right)^2 \qquad \text{(i)}$$

*where*

$$w_z = (|na \cdot z| > w_0)?|na \cdot z|:w_0 \qquad \text{(ii)}$$

*where*

$$na = \frac{1.22 \cdot \lambda}{2 \cdot w_0} \qquad \text{(iii)}$$

*where*

$\lambda$ = wavelength of light
$w$ = pixel size
$z$ = distance from plane of focus
$na$ = numerical aperture
$I$ = intensity
$w_o$ = pixel size at plane of focus
$w_z$ = pixel size a distance z from plane of focus
$I_{SC}$ = intensity of slit confocal system

The equations for a slit-confocal system to set first approximation are

*Using equations (ii) and (iii)*

$$I_{SC} = \left( \frac{\pi \cdot w_0^2}{R_z \cdot \pi \cdot w_z^2} \right)^2 \qquad \text{(iv)}$$

*where*

$$R_z = \frac{\pi - \theta_z + \sin \theta_z}{\pi} \qquad \text{(v)}$$

*where*

$$\theta_z = 2 \cdot \cos^{-1} \left( \frac{w_0}{w_z} \right) \qquad \text{(vi)}$$

This gives a fairly similar drop off in intensity with change in focus as shown in Figure 3.

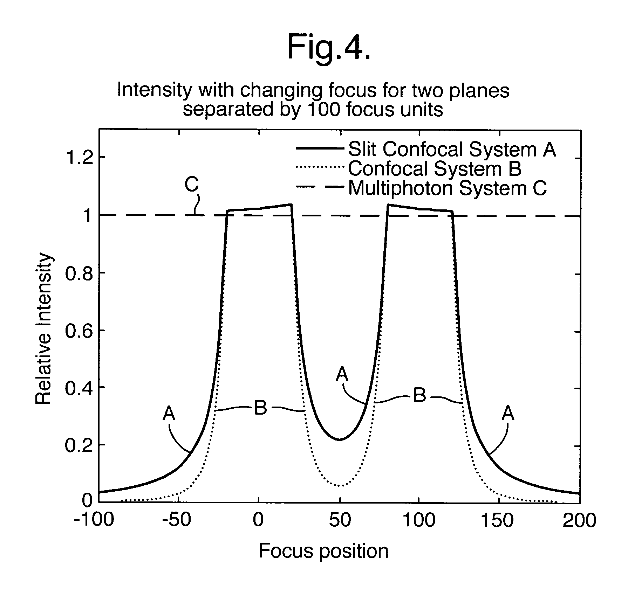

The cross talk between two focal planes is thus increased for the slit-confocal case but as can be seen in Figure 4, this is limited and much less than that for a non-confocal case or a multiphoton system.

The use of a 2D detector for a slit scanner has a number of disadvantages to it. One is that the integration time, the time for which the detectors accept photons, is set as the time for a full frame. The longer the integration time the larger the dark noise from the detector. This is why cooled CCD cameras are used in these systems as the lowering of the temperature lowers the thermal noise.

In accordance with a first aspect of the present invention, a slit confocal microscope comprises a linear light source; a detection system; and a focussing system for focussing light from the source onto a sample and focussing returning light onto the detection system, wherein the detection system comprises a one-dimensional, linear array of detectors onto which light from the sample is focussed directly or indirectly by the focussing system, and a control system for causing the linear array of detectors to integrate light from a corresponding line of pixels in the sample.

In accordance with a second aspect of the present invention, a method of operating a slit confocal microscope according to the first aspect of the invention comprises:

  a) illuminating a line of pixels from the sample, light from the sample being focused onto the linear array of detectors;
  b) integrating the incident light on the detectors corresponding to the line of pixels; and,
  c) repeating steps a) and b) with the same linear array of detectors for successive lines of pixels on the sample.

In the present invention, in place of the known 2D detector, we utilize a one-dimensional line scan detector such as a CCD, at the point of the detector slit, or confocal with it using other imaging optics, so that the integration time needs only to be as long as a single line integration time. For example, for a 512 line image, the noise from the thermal effects is 512 times greater on a 2D detector than that for a line scan detector. If the image is large, for instance with 10,000 lines then the thermal noise is 10,000 times greater for 2D detectors. There is thus a clear advantage in using line scan detectors over 2D detectors in that the noise is considerably lower enabling larger images to be scanned, or lower light levels to be detected or avoiding the use of cooling of the detector.

In order to build up a 2D image, relative movement must be caused between the line of illumination and the sample and this can be done in a variety of conventional ways. For example, the sample can simply be moved relative to the microscope or vice versa. Alternatively, the linear array of detectors can be moved across the imaging plane in phase with any slit which is provided in a moving slit or stationary slit arrangement. Suitable scanning systems using mirrors or the like are shown in Figures 2 and 3 of "Handbook of Biological Confocal Microscopy", 2nd Edition, James B Pawley, Plenum Press, chapter 25.

A second disadvantage of a 2D detector for a slit scanner is when colour imaging is required. Typically 2D CCD cameras are made from a mosaic of red, green and blue sensitive photo sites. This means there is no place where a single pixel has all three colours detected from exactly the same place on the sample. This leads to a drop in actual resolution of the image. The normal methods of overcoming this problem in 2D cameras of dithering the detector does not work well in the slit scanner unless the detector is dithered between consecutive frame scans of the image which is slow and difficult as each frame needs to be very accurately aligned to prevent jitter in the image. Errors of one tenth of a pixel can be detected and errors of one fifth of a pixel are easily detected.

If a line scan detector array is used then colour images can be produced in two different ways. One is to use a three stripe CCD detector. This has three lines of detectors which are displaced from each other by a small number of lines. To do this we need to illuminate the sample with three lines of different colour e.g. red, green and blue (RGB) as well so we have in effect three confocal lines. The lines are then moved across the image and each colour is then reregistered by delaying or shifting two of the colours by a suitable amount. This will remove any jitter problems and as colour registration is much more tolerant to around one third of a pixel is easier to do and does not require high accuracy over long periods of time such as a few frames but accuracy over a short period of time such as a few lines. This also reduces the sensitivity to the sample moving over the time. In this way, every pixel on the sample has all three colours detected.

The other way of using a line scan detector array to produce colour images is to use a single monochrome line scan detector and to change the colour of the light from the linear source. For example, it is possible to change the colour of the light on a line by line basis in which case the colours will always be one third of a pixel out of registration which can be compensated for, if required, by using interpolation methods but does not require any long term registration to be maintained. Another way of doing this is to change the colour on a frame by frame basis but this requires one third of a pixel registration over three frames to produce acceptable images, which is more difficult.

Some examples of slit confocal microscopes according to the invention will now be described and contrasted with known microscopes with reference to the accompanying drawings, in which:-

Figure 1 illustrates the primary components of a conventional confocal microscope;

Figure 2 illustrates the microscope of Figure 1 but with the object in an out-of-focus position;

Figure 3 illustrates for a slit confocal microscope the variation in intensity from each plane with changing focus for two planes separated by 100 focus units;

Figure 4 illustrates for a slit confocal microscope a confocal microscope and a multiphoton microscope the intensity of the changing focus for two planes separated by 100 focus units;

Figures 5A and 5B are a side elevation and plan view of an example of a slit confocal microscope according to the invention;

Figure 6 illustrates (not to scale) a multi-colour CCD array;

Figure 7 illustrates schematically an alternative illumination system; and,

Figure 8 illustrates part of a multi-colour slit confocal microscope.

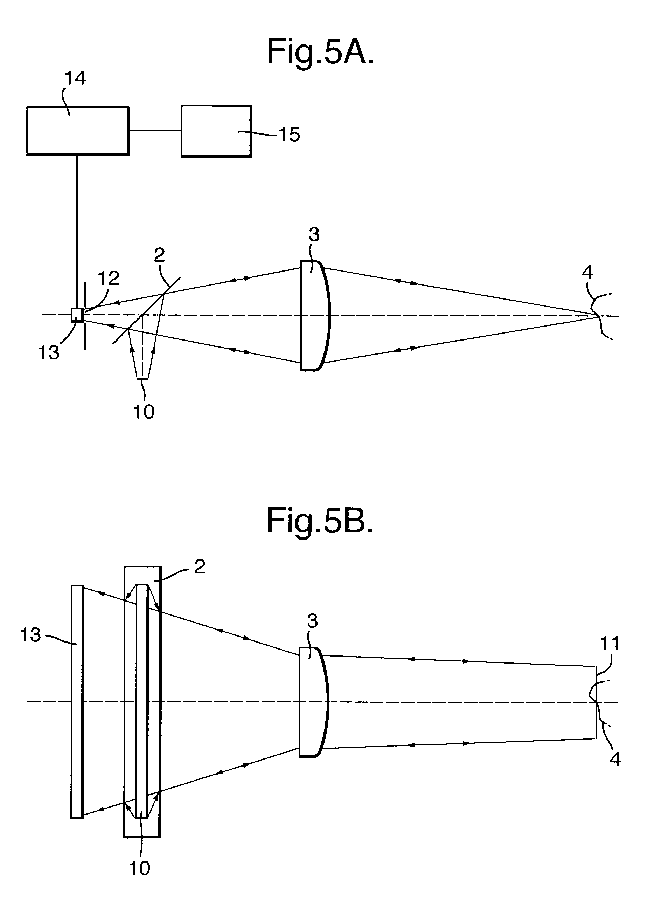

Figures 5A and 5B illustrate an example of a slit confocal microscope according to the invention, in side view and plan respectively. In this case, the source 1 comprises a linear source 10 which generates a line of white light which is focussed by the lens 3 onto the object where, in plan view, it illuminates a linear region 11. The returning light is focussed onto a linear detector array 13 in front of which is provided an optical slit opening 12, also effectively at the focus of the lens 3.

The detector 13 is connected to a processor 14 which in turn is connected to a data store 15.

In use, the object is illuminated by a line of light from the source 10 and this causes light reflected from and/or emitted by the object to be focused onto the linear array of detectors 13, typically a CCD array. After an integration time, the processor 14 controls the array 13 to transfer the accumulated charge on each detector to a transfer gate, the charges then being serially downloaded to the processor 14 and stored in the store 15.

Although Figure 5A illustrates the presence of a linear slit opening 12, this is not essential if the detector 13 is located at the focal point of the lens 3 and thus the slit opening 12 has been omitted in Figure 5B.

In an alternative arrangement (not shown), the slit opening 12 could be provided with the detector 13 spaced behind the slit opening and with further focusing optics to focus light received through the slit opening 12 onto the detector array 13. In other words, a second confocal arrangement is provided between the detector 13 and the slit opening 12. This can be useful from a practical point of view where it is difficult to locate the detector array 13 at the focal point of the lens 3.

There are a number of ways in which a two-dimensional image of the surface of the object 4 can be generated. One approach is to cause relative bodily movement between the slit confocal microscope on the one hand and the object 4 on the other with the source 10 illuminating successive lines of pixels on the surface of the object. Light from those lines of pixels is then stored in a corresponding array in the store 15.

In a conventional confocal system, however, this slow scan is normally generated with the use of a scanning mirror system which is difficult to make accurately repeatable, uniform in speed of scanning and to cover a large area. Typically, the image sizes are 512x512 pixels. This approach can be used to advantage in the invention where the line scanner slit confocal system requires no moving mirrors in the optical path and is much more repeatable and easier to make accurate. Also it is easy to scan large areas as the length of a CCD detector 13 is typically 10000 pixels and the length of traverse is limited only by how far it is desired to move the object or the scanning system. Typical scan sizes can be as large as 10,000x10,000 pixels or even longer in the slow scan direction. Thus, the slit opening 12 or detector 13 is maintained stationary and a mirror system used to cause light from the light source 1 to impinge on different lines of pixels on the object surface 4. Suitable systems are shown in Figures 2 and 3 of "Handbook of Biological Confocal Miscroscopy ", 2nd Edition, James B Pawley, Plenum Press, chapter 25.

In another example, a mirror system is provided to cause successive lines of pixels on the object to be illuminated by the line of light from the source 1 and the detector 13 is moved across the confocal plane defined by the lens 3 so as to record light from each illuminated line of pixels. In other words, the slit in front of the detector is omitted and the detector array is effectively moved in phase with the "slit".

In the examples described so far, the detector has been monochromatic and the light source 1 has generated a line of white or monochromatic light. It is possible to modify the apparatus shown in Figures 5A and 5B to handle colour imaging.

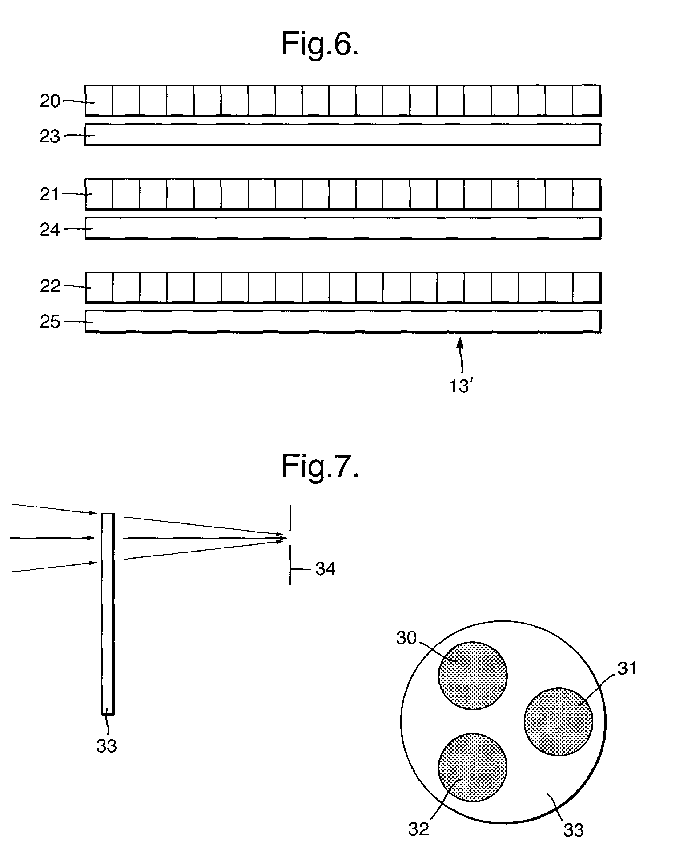

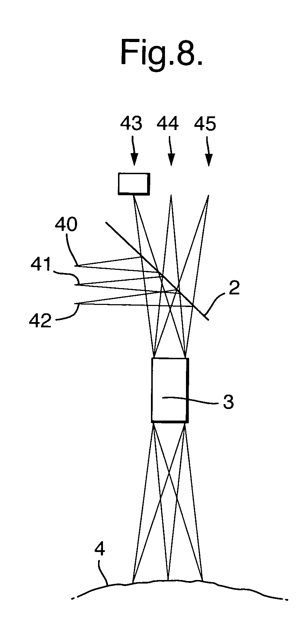

In a first example, the detector 13 is replaced by a multi-stripe CCD (or other) array 13' shown in Figure 6. In this case, three lines or stripes of detectors are provided on a common support, namely a line of red sensitive detectors 20, green sensitive detectors 21 and blue sensitive detectors 22. Each line of detectors is associated with a respective transfer gate 23,24,25. These are individually coupled with the processor 14. In practice, each line of detectors 20,21,22 is spaced by about 12 such lines from the adjacent line of detectors. In this case, the line source generates three slit shaped beams of different colours, typically red, green, blue 40,41,42. These are focused by the lens 3 following reflection by the beamsplitter 2 onto spaced lines on the object 4. Light from the object 4 is then returned through the lens 3 and focused through the beamsplitter 2 to three different confocal locations 43-45 (Figure 8). Effectively, therefore, three slit confocal systems are defined.

The detector array 13' is then traversed from left to right, as seen in Figure 8, to bring the appropriate array of detectors in line with the focused image. Thus, the red sensitive detectors 20 will be aligned with the focus 43 and then the array 13' moved to bring the green sensitive detectors 21 into alignment with the focal position 44, and then moved once more to bring the blue sensitive detectors 22 in line with the focus 45. Following a full scan, red, green and blue images will be obtained from each line on the object 4 and these can be rearranged into phase with each other in a straightforward manner by the processor 14 to generate a resultant colour for each pixel on the object 4.

It should be understood that the detector array shown in Figure 6 is not being used as a two-dimensional array but as a set of one-dimensional arrays which obtain light from the same linear array of pixels on the surface of the object 4.

An alternative approach is illustrated in Figure 7 in which a monochromatic detector array 13 is used but the colour generated by the light source 1 is varied. This can be achieved in a number of different ways of which Figure 7 is one example. In this case, white light from a linear source 1 passes through one of a set of three red, green and blue filters 30-32 located on a rotatably mounted filter wheel 33. In a first stage, the filter wheel 33 is arranged such that the red filter 30 is aligned with the white light so that only red light passes through the filter wheel 33 to an illumination slit 34 prior to impinging on the beam splitter 2. Information from the object 4 is then recorded by the detector array 13 and downloaded to the processor 14. The filter wheel 33 is then rotated to bring the green filter 31 into alignment with the white light and the process repeated. The process is repeated once more with the filter 32 in alignment with the white light source. The three sets of colour information for each pixel in the same line on the object 4 are then processed as described above.

In use, consider an example in which the detector 13, lens 3 and illumination slit 34 are all fixed with respect to each other and the object 4 is moved continuously. If we assume the time to take a line of red, green and blue pixels is t then each line of pixels of one particular colour e.g. red when the red filter wheel is in the illumination path, or green when the green filter in the filter wheel is in the illumination path, or blue when the blue filter in the filter wheel is in the illumination path, is captured in time t/3. The width of the illumination slit 34 is arranged to be x such that in time t the sample 4 has moved x in relation to the microscope. Thus we detect a series of red, green and blue lines x/3 out of phase with each other. This can be corrected if desired with the use of interpolation.

Of course, a similar process can be used when other means are adapted to cause relative movement.

In another example (not shown), the light source could comprise a number of differently coloured sources such as LEDs which are selectively energized to generate light of different wavelengths.

## Claims

1. A slit confocal microscope comprising a linear light source; a detection system; and a focusing system for focusing light from the source onto a sample and focusing returning light onto the detection system, wherein the detection system comprises a one-dimensional, linear array of detectors onto which light from the sample is focused directly or indirectly by the focusing system, and a control system for causing the linear array of detectors to integrate light from a corresponding line of pixels in the sample.

2. A microscope according to claim 1, further comprising a mask defining a slit at the focus of light from the sample.

3. A microscope according to claim 2, further comprising a further focusing system for focusing the slit onto the linear array of detectors.

4. A microscope according to any of the preceding claims, wherein the linear array of detectors is located at the focus of the focusing system.

5. A microscope according to any of the preceding claims, further comprising means for moving the array of detectors (and slit if provided) relative to a sample in an image plane of the focusing system.

6. A microscope according to any of the preceding claims, wherein the detection system comprises more than one linear array of detectors, the arrays being substantially parallel with one another, each array of detectors being sensitive to a respectively different colour.

**7.** A microscope according to claim 6, wherein the light source is adapted to generate more than one beam of respectively different colours, the focusing system focusing returning light to respectively different focal locations, and wherein the detecting system is movable to bring each array to the corresponding focal location of the focussing system.

**8.** A microscope according to any of the preceding claims, wherein the detection system comprises a single linear array of detectors, and the linear light source is adapted to generate lines of different colours alternately, the detection system being sensitive to all colours generated by the linear light source.

**9.** A slit confocal microscope according to any of claims 6 to 8, wherein the colours comprise red, green and blue.

**10.** A microscope according to any of the preceding claims, wherein the linear array of detectors comprises a CCD array.

**11.** A method of operating a slit confocal microscope comprising a linear light source; a detection system; and a focusing system for focusing light from the source onto a sample and focusing returning light onto the detection system, wherein the detection system comprises a one-dimensional, linear array of detectors onto which light from the sample is focused directly or indirectly by the focusing system, and a control system for causing the linear array of detectors to integrate light from a corresponding line of pixels in the sample, the method comprising:

> a) illuminating a line of pixels from the sample, light from the sample being focused onto the linear array of detectors;
> b) integrating the incident light on the detectors corresponding to the line of pixels; and,
> c) repeating steps a) and b) with the same linear array for successive lines of pixels on the sample.

**12.** A method according to claim 11, further comprising causing relative movement between all or part of the microscope and the sample to illuminate different lines of pixels on the sample.

**13.** A method according to claim 11 or claim 12, the method comprising carrying out steps a)-c) for one colour and then repeating steps a)-c) for the same line of pixels but when illuminated with one or more further colours.

**14.** A method according to any of claims 11 to 13, the method comprising, for each line of pixels, carrying out steps a) and b) for each of two or more colours before carrying out step c).

**15.** A method according to any of claims 11 to 14, comprising causing continuous relative movement between the sample and the detection system such that successive lines of pixels on the sample are focused on to the detection system; repeatedly illuminating the sample with different colours at a rate such that a line of pixels illuminated with one colour overlaps a line of pixels illuminated with the next colour; and, for each illuminated line of pixels integrating the incident light on the detectors.

# Fig.1.

# Fig.2.

# Fig.3.

Intensity from each plane with changing focus for two
planes separated by 100 focus units

# Fig.4.

Intensity with changing focus for two planes
separated by 100 focus units

# Fig.5A.

# Fig.5B.

# Fig.6.

20

23

21

24

22

25

13'

# Fig.7.

34

33

30

31

32

33

# Fig.8.